# EUROPÄISCHE PATENTSCHRIFT

(11) **EP 0 789 000 B1**
(45) Veröffentlichungstag und Bekanntmachung des Hinweises auf die Patenterteilung: **17.05.2006**
(21) Anmeldenummer: 97890020.7
(22) Anmeldetag: 06.02.1997
(51) Int. Cl.: C02F 1/44, C02F 9/00, C09D 11/00, B41M 3/14

(54) **Verfahren zur Behandlung von verunreinigten alkalischwässrigen Reinigungslösungen**
Process for treating polluted alkaline aqueous cleaning solutions
Procédé de traitement de solutions alcalines aqueuses polluées de nettoyage

(30) Priorität: 12.02.1996 AT 24796
(43) Veröffentlichungstag der Anmeldung: 13.08.1997
(73) Patentinhaber: OESTERREICHISCHE NATIONALBANK, 1090 Wien (AT)
(72) Erfinder: Arnberger, Günter, Ing., 2410 Hainburg (AT); Fajmann, Peter, 3130 Herzogenburg (AT); Eder, Heinrich, 3123 Obritzberg (AT)
(74) Vertreter: Casati, Wilhelm

(56) Entgegenhaltungen:
- EP-A- 0 344 011
- EP-A- 0 636 401
- WO-A-91/16294
- WO-A-93/00154
- CN-A- 1 107 075
- DE-A- 4 440 353
- US-A- 4 412 921
- US-A- 5 017 291
- US-A- 5 205 937
- PATENT ABSTRACTS OF JAPAN vol. 012, no. 219 (C-506), 22.Juni 1988 & JP 63 016097 A (EBARA INFILCO CO LTD;OTHERS: 02), 23.Januar 1988, & DATABASE WPI Section Ch, Week 8809 Derwent Publications Ltd., London, GB; Class D15, AN 88-060542
- PATENT ABSTRACTS OF JAPAN vol. 008, no. 232 (C-248), 25.Oktober 1984 & JP 59 115795 A (SANYO KOKUSAKU PULP KK), 4.Juli 1984, & DATABASE WPI Section Ch, Week 8509 Derwent Publications Ltd., London, GB; Class D15, AN 85-051869
- PATENT ABSTRACTS OF JAPAN vol. 006, no. 135 (C-115), 22.Juli 1982 & JP 57 059610 A (SANYO KOKUSAKU PULP CO LTD), 10.April 1982, & DATABASE WPI Section Ch, Week 8220 Derwent Publications Ltd., London, GB; Class F09, AN 82-40274e
- PATENT ABSTRACTS OF JAPAN vol. 096, no. 003, 29.März 1996 & JP 07 290053 A (FUJI XYNETICS KK), 7.November 1995, & DATABASE WPI Section Ch, Week 9602 Derwent Publications Ltd., London, GB; Class D15, AN 96-015744 & CHEMICAL ABSTRACTS, vol. 124, no. 8, 19.Februar 1996 Columbus, Ohio, US; abstract no. 96506,
- PATENT ABSTRACTS OF JAPAN vol. 013, no. 273 (C-609), 22.Juni 1989 & JP 01 067296 A (KOMORI PRINTING MACH CO LTD;OTHERS: 01), 13.März 1989, & DATABASE WPI Section Ch, Week 8916 Derwent Publications Ltd., London, GB; Class D15, AN 89-119926

## Beschreibung

Die Erfindung betrifft ein Verfahren zur Behandlung von mit Druckfarben, Lacken, Dispersionen und ähnlichen Produkten verunreinigten wässrigen Reinigungslösungen, wie sie bei der Herstellung von Druckfarben und Lacken sowie bei Lackier- und Druckprozessen, insbesondere auch beim Banknotendruck anfallen, wobei die Schmutzlösung einer Ultrafiltration mit Membranen unterworfen wird und das Konzentrat aus der Ultrafiltration weiterbehandelt wird.

Die gereinigte Lösung kann abgezogen und dem Prozeß, gegebenenfalls nach Zwischenspeicherung, wieder zugeführt werden.

Bei der Verarbeitung und Herstellung von wasserverdünnbaren bzw. wasseremulgierbaren Farb- und Lacksystemen, insbesondere auch beim Stichtiefdruckverfahren für den Banknotendruck, fallen große Mengen an wäßrigen Reinigungs-, Verdünnungs- und Prozeßabwässem an, welche in der Regel mit Farb-und Lackresten verunreinigt sind. Der Verunreinigungsgrad kann 0,1 - 30 Gew.-% betragen.

Stand der Technik bei der Reinigung dieser wäßrigen Lösungen ist derzeit die Rückgewinnung von ca. 40 - 70 Gew.-% der eingesetzten Menge an Reinigungslösung. Der verbleibende Rest muß nach einem Fällungs- und Neutralisationsverfahren behandelt werden, wobei in der Regel feste bis pulverförmige Produkte mit ca. 20 - 25 Gew.-% Restfeuchte anfallen, welche entsorgt werden müssen. Das dabei verbleibende Abwasser muß, um den Einleitverordnungen der Behörde zu entsprechen, weiterbehandelt werden (Aktivkohlebehandlung, biologische Behandlung, Osmose usw).

In der CN-A-1 107 075 (ECOLOGICAL ENVIRONMENT RESEARCH) 23. August 1995 & DATABASE EPODOC & CHEMICAL ABSTRACTS, vol.124, No. 10, 4. März 1996 Columbus, Ohio, US, abstract No. 126224, ist ein Verfahren zur Behandlung von verunreinigten Reinigungslösungen beschrieben, die zur Reinigung von Druckplatten für Banknoten eingesetzt werden. Die verunreinigte Lösung wird hiebei einer Ultrafiltration durch Membranen aus organischem Material unterworfen.

In der EP-0 344 011 A1 werden anorganische Filter für die Ultra- und Mikrofiltration beschrieben. Das Filter besteht dabei aus einem ein- oder mehrschichtigen, porösen Träger, auf dem sich mindest eine dünne poröse Schicht befindet. Die Schichten können aus α-Aluminiumoxid, Zirkoniumaxid , Titanoxid, Karbon bestehen.

Die US-PS 5 205 937 beschreibt ein Verfahren zum Trennen von Verunreinigungen in wässrigen Reinigern durch Filtration, wobei die verunreinigte Reinigungslösung durch eine Metalloxidmembran auf einem Keramikträger hindurchgeleitet wird. Der Keramikträger kann ein solcher aus α-Aluminiumoxid sein, jedoch kommen auch Eisenoxid, Titanoxid, Zirkoniumoxid in Frage. Die Membran besteht bevorzugt aus gesintertem Zirkonoxid. Auch andere Metalloxidpartikel können für die Membranschicht auch im Gemenge verwendet werden. Erwähnt sind gesintertes Zirkonoxid oder α-Aluminiumoxid oder andere Sintermetalloxide, die widerstandsfähig gegen aggressive und extreme Beanspruchungen durch Säuren oder Laugen bei erhöhten Temperaturen sind.

Bekannt wurde bereits ein Prozeßwasser-Recycling-Verfahren, insbes. für Prozeßwasser von Druckmaschinen (EP-A1-636401), bei dem Prozeßwasser entnommen und in einem Ultrafiltrationsfilter in Filtrat und Konzentrat zerlegt wird. Das Filtrat wird über eine Prozeßwasserrückführleitung in ein Prozeßwasser-Aggregat zurückgeführt; das Konzentrat hingegen wird über eine Fluidleitung mehrmals in einen Arbeitsbehälter zurückgeführt, durch welche auch das Prozeßwasser auf seinem Weg vom Prozeßwasser-Aggregat zum Ultrafiltrationsfilter hindurchgeführt wird. Das Konzentrat wird nach Erreichen einer bestimmten Konzentration aus diesem Filterkreislauf ausgeschieden, chemisch aufbereitet, in eine auszuscheidende Feststoffphase und eine in den Filterkreislauf zurückgeführte Flüssigkeitsphase aufgeteilt. Bei dem bekannten Verfahren arbeitet das Recyclingverfahren getrennt von der Prozeßwasserzufuhr zur Druckmaschine. Nach dem bekannten Verfahren sollen störende Prozeßwasserbestandteile unter Einhaltung gesetzlicher Umweltvorschriften auf einfache Weise schnell entsorgt werden können.

Das Prozeßwasser soll gereinigt werden, ohne daß lösliche Substanzen in das Prozeßwasser gelangen. Durch Anwendung des bekannten Verfahrens soll aber auch unbrauchbar gewordenes Prozeßwasser, insbesondere nach Havarien, unter Einhaltung gesetzlicher Umweltvorschriften zur Entsorgung aufbereitet werden können. Zur Entsorgung von verbrauchtem Prozeßwasser soll dieses nach dem bekannten Verfahren durch feste Spaltmittel auf Betonit-Basis und Oxidationsmittel oder anderen umweltfreundlichen Mitteln aufbereitet werden können.

Aufgabe der Erfindung ist es, eine Verfahrensführung zur Reinigung und Wiederverwertung von oben angeführten Schmutzwasserarten zu finden, bei der kein Abwasser anfällt und ein hoher Anteil der Reinigungs- und Prozeßwässer in annähernd ursprünglicher Zusammensetzung zurückgewonnen wird; der verbleibende Rest wird in einer Form gewonnen, welche eine Wiederverwendung für gleichartige, ähnliche oder aber auch andere Produkte, wie z.B. Teerpappe, Bitumen usw., oder gegebenenfalls eine problemlose Entsorgung ermöglicht.

Erreicht wird dies bei einem Verfahren der eingangs erwähnten Art dadurch, daß zur Behandlung alkalischwässriger Reinigungslösungen, in der Ultrafiltration als Membranen anorganische Membranen eingesetzt werden und die Ultrafiltration bis zu einem Anfall von mindest 95 Gew.- %, bevorzugt 95 - 98 Gew.- % an gereinigter Lösung geführt wird, die gereinigte Lösung abgezogen wird und das Konzentrat der Ultrafiltration einer Vakuumdestillation unterworfen und auf einen Feststoffgehalt von 50 - 70 Gew.-% eingedickt wird oder aber das Konzentrat der Ultrafiltration zur Granulierung einer Vakuumdestillation bei einer Temperatur von 35 - 170°C ansteigend in einem Vakuumgranulierer unterworfen wird, wobei der verbleibende Rest als weitestgehend wasserfreies Granulat anfällt.

Aus Vorstehendem ergibt sich, daß bei den vorerwähnten beiden Ausführungsformen des erfindungsgemäßen Verfahrens in einem ersten Verfahrensschritt, nämlich der Ultrafiltration, 95 - 98 Gew.-% der verunreinigten, oben angeführten wässrigen Lösung zurückgewonnen werden können und diese Lösung ohne Zugabe von Chemikalien wieder dem Produktionsprozeß zugeführt werden kann. Das verbleibende Konzentrat (zwischen 2 - 5 Gew.-%) kann entweder durch Vakuumdestillation konzentriert werden, wobei ein viskoses bis hochviskoses Konzentrat mit einem Festkörpergehalt von 50 - 70 Gew.-% anfällt oder es kann das verbleibende Konzentrat mittels Vakuumgranulation zu einem pulverartigen Granulat verarbeitet werden.

Bei der Vakuumdestillation des Konzentrates aus der Ultrafiltration kann ein Entschäumer in einer Gewichtsmenge von 0,1 - 5 Gew.-% eingesetzt werden. Das bei der Vakuumdestillation anfallende Destillat kann dem Prozeß wieder zugeführt werden.

Die anorganischen Membranen im Ultrafiltrationsschritt können eine Membranschicht aus α-Aluminiumoxid aufweisen, die auf einer Zirkoniumoxidbasis aufgebracht ist. Es können in der Ultrafiltration als anorganische Membranen auch solche eingesetzt werden, bei welchen eine Zirkonium-Titanoxidschicht auf einer Karbonbasis aufgebracht ist.

In weiterer Ausgestaltung des erfindungsgemäßen Verfahrens kann zur Ultrafiltration ein Filter mit einer Trenngrenze zwischen 5000 bis 150 000 Dalton, vorzugsweise 50000 Dalton, eingesetzt werden. Die Anwendung dieser Trenngrenzen bringt bei der Ultrafiltration besonders günstige Ergebnisse.

Bevorzugt wird die Vakuumdestillation bei einer Temperatur im Bereich von 35° bis 60°C, vorzugsweise bei 40°C, ausgeführt.

Als Filter für die Durchführung des Filtrationsschrittes eignet sich bevorzugt ein solches, bei dem die Zirkoniumoxidbasis und bzw. oder Karbonbasis für die Membranschicht als Rohr ausgebildet ist, dessen Innendurchmesser 2 - 17 mm, vorzugsweise 5 mm, beträgt.

### Beispiele:

### Beispiel 1:

10.000 l einer mit Druckfarben verunreinigten wässrigen Reinigungslösung, wie sie z.B. beim Drucken von Banknoten im Stahlstichverfahren anfällt, wurden mittels Ultrafiltration auf 300 l aufkonzentriert. 9700 l gereinigte Lösung wurden sofort ohne jeglichen Zusatz von Chemikalien wieder dem Druckprozeß zugeführt.

Die verbleibende Menge an Konzentrat im Ausmaß von 300 Litern wird einer Vakuumdestillation zugeführt und unter Zusatz von 0,5 Gew.-% eines Entschäumers, nämlich Lackadditiv OL-17 (Polyäthersiloxan wasserlöslich), auf einen Festkörpergehalt von 70 Gew.-% eingedickt. Das Destillat wurde für den Neuansatz von Reinigungslösungen verwendet. Die eingedickte Menge, welche Festkörper enthielt, wurde als Zusatz für Druckfarbe verwendet.

### Beispiel 2:

Nach der Ultrafiltration gemäß Beispiel 1 wird die verbleibende Menge an Konzentrat im Ausmaß von 300 Litern einer Vakuumdestillation zugeführt und unter Zusatz von 0,5 Gew.% eines Entschäumers, nämlich Lackadditiv OL-17 (Polyäthersiloxan wasserlöslich), auf einen Festkörpergehalt von 70 Gew.-% eingedickt. Das Destillat wurde für den Neuansatz von Reinigungslösungen verwendet. Die eingedickte Menge, welche Festkörper enthielt, wurde als Zusatz für Druckfarbe verwendet.

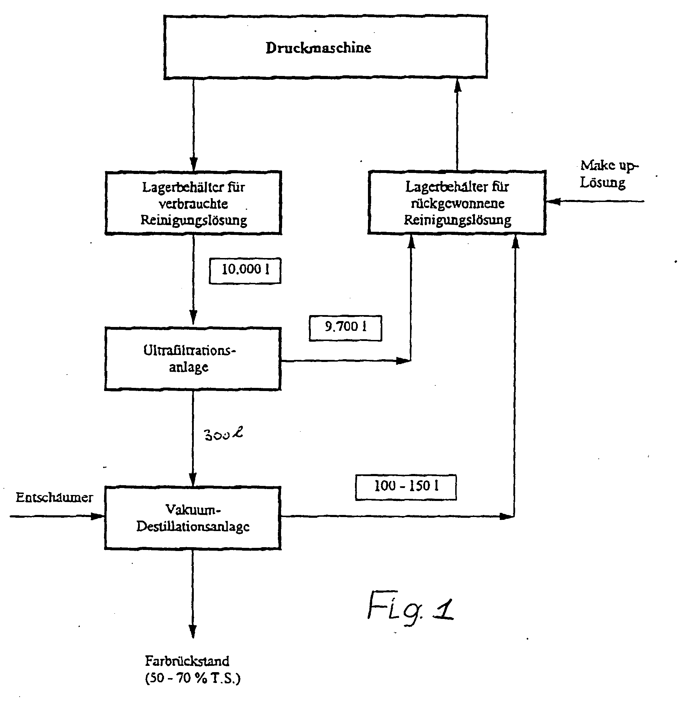

Das erfindungsgemäße Verfahren ist beispielsweise in der Zeichnung anhand eines Fließschemas dargestellt, das eine Verfahrensführung veranschaulicht, bei der an die Ultrafiltration eine Vakuumdestillation für den Rückstand aus der Ultrafiltration angeschlossen ist.

## Patentansprüche

1. Verfahren zur Behandlung von mit Druckfarben, Lacken, Dispersionen und ähnlichen Produkten verunreinigten wässrigen Reinigungslösungen, wie sie bei der Herstellung von Druckfarben und Lacken sowie bei Lackier- und Druckprozessen, insbesondere auch beim Banknotendruck, anfallen, wobei die Schmutzlösung einer Ultrafiltration mit Membranen unterworfen wird und das Konzentrat aus der Ultrafiltration weiterbehandelt wird, **dadurch gekennzeichnet, daß** zur Behandlung alkalischwässriger Reinigungslösungen, in der Ultrafiltration als Membranen anorganische Membranen eingesetzt werden und die Ultrafiltration bis zu einem Anfall von mindestens 95 Gew.-%, bevorzugt 95 - 98 Gew.-%, gereinigter Lösung geführt wird, die gereinigte Lösung abgezogen wird und das Konzentrat der Ultrafiltration einer Vakuumdestillation unterworfen und auf einen Feststoffgehalt von 50 - 70 Gew.-% eingedickt wird oder aber das Konzentrat der Ultrafiltration zur Granulierung einer Vakuumdestillation bei einer Temperatur von 35 - 170°C ansteigend in einem Vakuumgranulierer unterworfen wird, wobei der verbleibende Rest als weitestgehend wasserfreies Granulat anfällt.

2. Verfahren nach Anspruch 1, **dadurch gekennzeichnet, daß** die Vakuumdestillation des Konzentrates aus der Ultrafiltration unter Zusatz eines Entschäumers in einer Menge von 0,1-5 Gew.-% ausgeführt wird.

3. Verfahren nach Anspruch 1 oder 2, **dadurch gekennzeichnet, daß** das bei der Vakuumdestillation anfallende Destillat wieder dem Prozess zugeführt wird.

4. Verfahren nach einem der Ansprüche 1 - 3, **dadurch gekennzeichnet, daß** das bei der Vakuumdestillation anfallende und Farbstoffe enthaltende Sediment einer weiteren Verwendung für gleichartige, ähnliche, jedoch auch andere Produkte, z.B. Teerpappe, Bitumen, gegebenenfalls nach Zwischenlagerung, zugeführt wird.

5. Verfahren nach einem der Ansprüche 1 bis 4, **dadurch gekennzeichnet, daß** in der Ultrafiltration als anorganische Membranen solche eingesetzt werden, bei welchen eine Membranschicht aus α-Aluminiumoxid auf einer Zirkoniumoxidbasis aufgebracht ist.

6. Verfahren nach einem der Ansprüche 1 bis 5, **dadurch gekennzeichnet, daß** in der Ultrafiltration als anorganische Membranen solche Membranen eingesetzt werden, bei welchen eine Zirkonium-Titanoxidschicht auf einer Karbonbasis aufgebracht ist.

7. Verfahren nach einem der Ansprüche 1 bis 6, **dadurch gekennzeichnet, daß** in der Ultrafiltration ein Filter mit einer Trenngrenze zwischen 5000 - 150000 Dalton, vorzugsweise 50000 Dalton, eingesetzt wird.

8. Verfahren nach einem der Ansprüche 1 bis 7, **dadurch gekennzeichnet, daß** die Vakuumdestillation bei einer Temperatur im Bereich von 35 - 60°C, vorzugsweise 40°C, ausgeführt wird.

## Claims

1. A method of treating aqueous cleaning solutions contaminated with printing inks, lacquers, dispersions and similar products, as are produced in the manufacture of printing inks and lacquers and in lacquering and printing processes, particularly when printing bank notes, in which the contaminated solution is subjected to ultrafiltration with membranes and the concentrate from the ultrafiltration is further treated, **characterised in that** for the treatment of alkaline aqueous cleaning solutions, inorganic membranes are used as the membranes in the ultrafiltration and the ultrafiltration is performed to a yield of at least 95% by wt. preferably 95-98% by wt. cleaned solution, the cleaned solution is withdrawn and the concentrate of the ultrafiltration is subjected to vacuum distillation and thickened to a solid material content of 50-70% by wt. or the concentrate from the ultrafiltration is subjected for the purpose of granulation to vacuum distillation at an increasing temperature of 35-170°c in a vacuum granulator, whereby the remaining residue is produced in the form of a very substantially water-free granulate.

2. A method as claimed in claim 1, **characterised in that** the vacuum distillation of the concentrate from the ultrafiltration is performed with the addition of a defoaming agent in the amount of 0.1-5% by wt.

3. A method as claimed in claim 1 or 2, **characterised in that** the distillate produced in the vacuum distillation is fed back to the process.

4. A method as claimed in one of claims 1-3 **characterised in that** the sediment, which is produced in the vacuum distillation and contains pigments, is supplied for further use for the same similar or different products, e.g. tar board and bitumen, optionally after intermediate storage.

5. A method as claimed in one of claims 1-4, **characterised in that** the organic membranes used in the ultrafiltration are those in which a membrane layer of α-aluminium oxide is applied to a zirconium oxide base.

6. A method as claimed in one of claims 1-5, **characterised in that** the inorganic membranes used in the ultrafiltration are those in which a zirconium-titanium oxide layer is applied to a carbon base.

7. A method as claimed in one of claims 1-6, **characterised in that** a filter is used in the ultrafiltration with a separation limit of between 5,000-150,000 Dalton, preferably 50,000 Dalton.

8. A method as claimed in one of claims 1-7, **characterised in that** the vacuum distillation is performed at a temperature in the range of 35-60°c, preferably 40°c.

## Revendications

1. Procédé pour le traitement de solution détergentes aqueuses souillées par des encres d'impression, des peintures, des dispersions et des produits analogues, telles qu'elles se produisent lors de la fabrication d'encres d'impression et de peintures, ainsi qu'au cours de processus de peinture ou d'impression, notamment aussi lors de l'impression de billets de banque, la solution souillée étant soumise à une ultrafiltration par membranes et le concentré issu de l'ultrafiltration étant soumis à un traitement ultérieur, **caractérisé en ce que** pour le traitement de solutions détergentes alcalines aqueuses, on utilise en tant que membrane pour l'ultrafiltration des membranes anorganiques et **en ce que** l'ultrafiltration est poursuivie jusqu'à une production d'au moins 95 % en poids, de préférence entre 95 et 98 % en poids de solution purifiée, la solution purifiée est décantée et le concentré de l'ultrafiltration est soumis à une distillation sous vide et épaissi à une teneur en matière solide de 50 à 70 % en poids ou **en ce que** pour sa granulation, le concentré issu de l'ultrafiltration est soumis à une distillation sous vide, à une température croissante de 35 à 170 °C dans un granulateur sous vide, les résidus restants se produisant sous la forme d'un granulé largement exempt d'eau.

2. Procédé selon la revendication 1, **caractérisé en ce que** la distillation sous vide du concentré issu de l'ultrafiltration est réalisée sous addition d'un agent antimoussant, dans une quantité de 0,1 à 5 % en poids.

3. Procédé selon la revendication 1 ou 2, **caractérisé en ce que** le produit de la distillation sous vide est à nouveau ramené au processus.

4. Procédé selon l'une quelconque des revendications 1 à 3, **caractérisé en ce que** le sédiment produit lors de la distillation sous vide et contenant des colorants est amené, le cas échéant après entreposage vers une autre application pour des produits similaires, analogues mais également pour d'autres produits, par exemple du carton bitumé, du bitume.

5. Procédé selon l'une quelconque des revendications 1 à 4, **caractérisé en ce que** la membrane anorganique utilisée lors de l'ultrafiltration est une membrane sur laquelle une couche de membrane en α-oxyde d'aluminium est appliquée sur une base d'oxyde de zirconium.

6. Procédé selon l'une quelconque des revendications 1 à 5, **caractérisé en ce que** la membrane anorganique utilisée lors de l'ultrafiltration est une membrane sur laquelle une couche d'oxyde de titane de zirconium est appliquée sur une base de carbone.

7. Procédé selon l'une quelconque des revendications 1 à 6, **caractérisé en ce qu'**au cours de l'ultrafiltration, on utilise un filtre avec une limite de séparation entre 5000 et 150 000 dalton, de préférence de 50 000 dalton.

8. Procédé selon l'une quelconque des revendications 1 à 7, **caractérisé en ce que** la distillation sous vide est réalisée à une température située dans la plage de 35 à 60 °C, de préférence à 40 °C.
